# EUROPEAN PATENT SPECIFICATION

(11) **EP 4 018 965 B1**
(45) Date of publication and mention of the grant of the patent: **27.12.2023**
(21) Application number: 21208018.8
(22) Date of filing: 12.11.2021
(51) Int. Cl.: A61C 19/05

(54) **METHOD FOR DETERMINING THE NORMAL STATIC AND DYNAMIC INTRAMAXILLARY RATIOS OF A PATIENT**
VERFAHREN ZUR BESTIMMUNG DER NORMALEN STATISCHEN UND DYNAMISCHEN INTRAMAXILLÄREN VERHÄLTNISSE EINES PATIENTEN
PROCÉDÉ POUR DÉTERMINER LES TAUX INTRAMAXILLAIRES NORMAUX STATIQUES ET DYNAMIQUES D'UN PATIENT

(30) Priority: 24.12.2020 IT 202000032369
(43) Date of publication of application: 29.06.2022
(73) Proprietor: Lastruttura S.p.A., 21012 Cassano Magnago (VA) (IT)
(72) Inventor: CAMPANA, Adriano, 21020 Brunello VA (IT)
(74) Representative: Modiano, Micaela Nadia

(56) References cited:
- WO-A1-2015/008215
- US-A1- 2014 372 084

## Description

The present invention relates to a method for determining the normal static and dynamic intramaxillary ratios of a patient, and in particular the intermaxillary distance (DVO).

Gnathology is a branch of dental surgery that studies the physiology, the diseases and the functions of the jaw. These functions include mastication, swallowing, the phonation and the postural function.

The present invention is made to achieve one of the goals of gnathology: to determine, with the maximum possible precision, the normal static and dynamic intramaxillary ratios of the patient.

By "normal" what is meant is the values that lie within the limits of individual physiological adaptability, without a dysfunction setting in.

The reference background art is constituted by what are known as "Luksich plates". These are based on the Gothic arch concept developed by Alfred Gysi in 1910 (GYSI, A. The problem of articulation. Dent. Cosmos, Philadelphia, vol. 52, no. 1, pp. 1-19, Jan. 1910).

US 2014/372084 A1 discloses a method of acquiring data from an individual for preparing a 3D model of the individual, the method comprising the steps of: a. performing an intraoral scan of the patient in maximum intercuspation; b. taking a plurality of photographs of the face of the patient which contain the front view of the mouth so as to obtain initial parameters related to said mouth of the patient.

In practice, nowadays, an apparatus called an A.G.E.LK (Luksich-intraoral-apparatus) is used which makes it possible to determine the NORMAL-BIO-CENTRIC with approximation down to a tenth of a millimeter on the vertical plane and to a hundredth of a millimeter of the centric relationship on the horizontal plane.

The A.G.E.LK is also used to obtain the dynamic inter-maxillary registrations, i.e.: protrusive, retrusive, laterality and the three-dimensional development of the tracing (S:T:T). These registrations are conducted by the patient completely autonomously, without any external interference, in full observance of the mandibular dynamic stated by Christensen of Copenhagen who in 1905 established that the physiological movements of the jaw on the horizontal plane are always curvilinear in protrusion, retrusion and in laterality, as can also be seen from the occlusal diagram proposed by Posselt in 1957.

In the background art, these acquisitions are taken using an analog work protocol that entails no fewer than 28 steps. These steps present operational criticalities which are linked to manual skills that have been consolidated over the years and which give rise to possible drawbacks, notwithstanding the fact that they have however obtained a large number of successes.

The twenty-eight basic steps of the conventional analog method are the following:
1. Take an upper and lower imprint.
2. Measure habitual occlusal relationships, to the right and left, with pink wax.
3. Measure the transfer face bow.
4. Develop models.
5. Duplicate models.
6. Position the upper model with magnets on an articulator using the transfer face bow (the face bow is used to measure the inclination and the position of the upper maxillary bone with respect to the cranial base - first gnathologic measurement).
7. Position the lower model using the habitual occlusal relationships.
8. On the duplicate models: construct the upper and lower supporting structure.
9. Transfer these structures to the master models.
10. Carry out the mounting of the A.G.E.LK. (intraoral gnathologic appliance - Luksich), following the standards and rules.
11. Apply the A.G.E.LK. to the mouth, making sure that it is completely free to move forward-backward-right and left, several times until no tracing is detected, in order to check whether the neuromuscular system is operating correctly.
12. If everything is deemed congruous, carry out the first attempt of the vertical rest dimension (free way space measured by allowing the jaw to fall and then closing the bite). Invite the patient to perform the mandibular excursions (with the tip touching the tracing plane) and of the normal occlusal vertical dimension.
13. If everything is proceeding correctly, remove the gold-plated shim on the threaded shank of the tracing tip.
14. Apply the phosphor bronze tracing pad on the pad-holder.
15. Again invite the patient to perform all the mandibular excursions.
16. The tracing with the apex is obtained.
17. Place the phosphor bronze pad on the plate in order to punch the apex and create a perforation. First with the 0.08 mm round burr and then with the 0.14 mm burr.
18. Remove the flash with a 0.3 mm round burr.
19. Reapply the tracing pad on the pad-holder.
20. On the threaded shank of the tip, reapply the 0.5 mm gold-plated shim corresponding to the thickness of the tracing pad.
21. Reapply everything to the mouth of the patient.
22. Check that the patient can close again in the apex hole.
23. Check the normal vertical dimension again (obtained starting from the freeway and removing 1.5 mm-1.75 mm in order to keep a free space for non-occlusion - according to Thompson).
24. If everything is consistent, proceed to lock the supporting structures using precision self-polymerizing resin (from melting).
25. From the mouth, remove the two supporting structures, which are now rigidly locked together.
26. On this guide, reposition the lower model, locking the supporting structures to the master models with wax adhesives.
27. After the plaster has hardened, remove the two supporting structures from the models and separate them.
28. Reapply on the master models and check the centric relationship. If everything has been carried out correctly, the jaw will be in a three-dimensional centric relationship with respect to the higher maxillary bone.

As previously mentioned, one of the principal limitations of the prior art consists of the presence of steps that are handled manually, both for measuring the imprint by the clinic, and for handling the thermoforming and manual execution by the technician. Such steps are complex, operator-dependent, and do not allow the patient to move freely owing to the complete encapsulation of the occlusal plane.

Another disadvantage of this conventional technique is the fact that the components can not be standardized.

Another limitation of this conventional technique is the difficulty of reading the acquired data.

The aim of the present invention consists of providing a method for determining the normal static and dynamic intramaxillary ratios of a patient that solves the above technical problem, compensates for the drawbacks and overcomes the limitations of the prior art in one or more of the above mentioned aspects.

Within this aim, an object of the present invention is to make it possible to standardize the components in order to make them better performing and easier to use in a method for determining the normal static and dynamic intramaxillary ratios of a patient.

Another object of the invention is to avoid steps that are handled manually, both in terms of taking the imprint by the clinic, and in terms of handling the thermoforming and manual execution by the technician, in a method for determining the normal static and dynamic intramaxillary ratios of a patient.

Another object of the invention consists of improving the work flow in a method for determining the normal static and dynamic intramaxillary ratios of a patient.

Another object of the invention is to improve the ease of reading the acquired data in a method for determining the normal static and dynamic intramaxillary ratios of a patient.

This aim and these and other objects which will become more apparent hereinafter are achieved by a method for determining the normal static and dynamic intramaxillary ratios of a patient according to claim 1.

This aim and these and other objects which will become more apparent hereinafter are also achieved by a pair of plates, which do not form part of the claimed invention.

Further characteristics and advantages of the invention will become more apparent from the detailed description of a preferred, but not exclusive, embodiment of a method for determining the normal static and dynamic intramaxillary ratios of a patient, which is illustrated by way of non-limiting example with the aid of the accompanying drawings wherein:

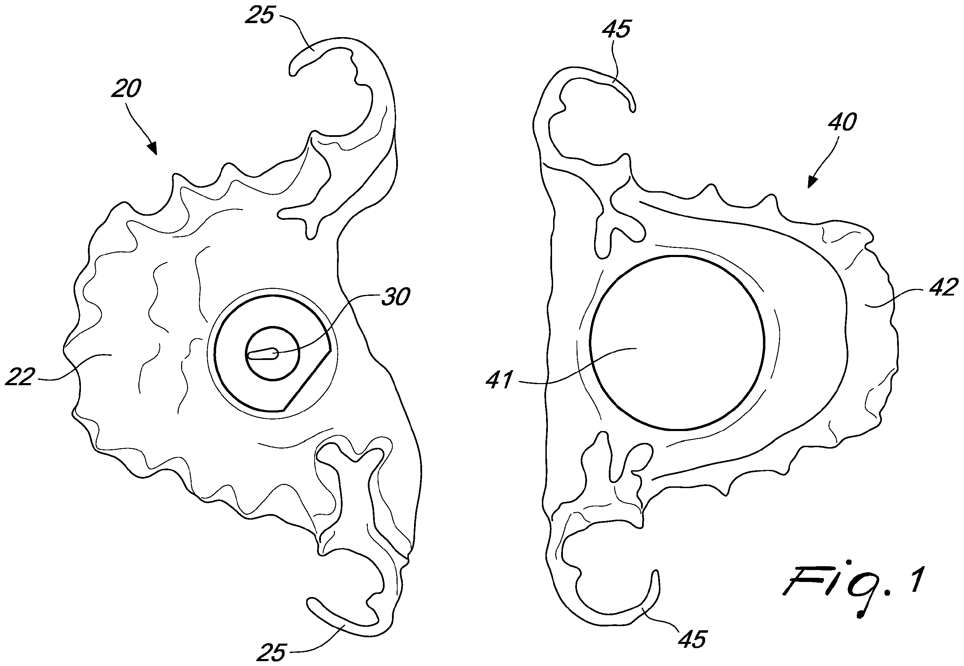

Figure 1 is a plan view of a pair of intraoral plates, which do not form part of the claimed invention;

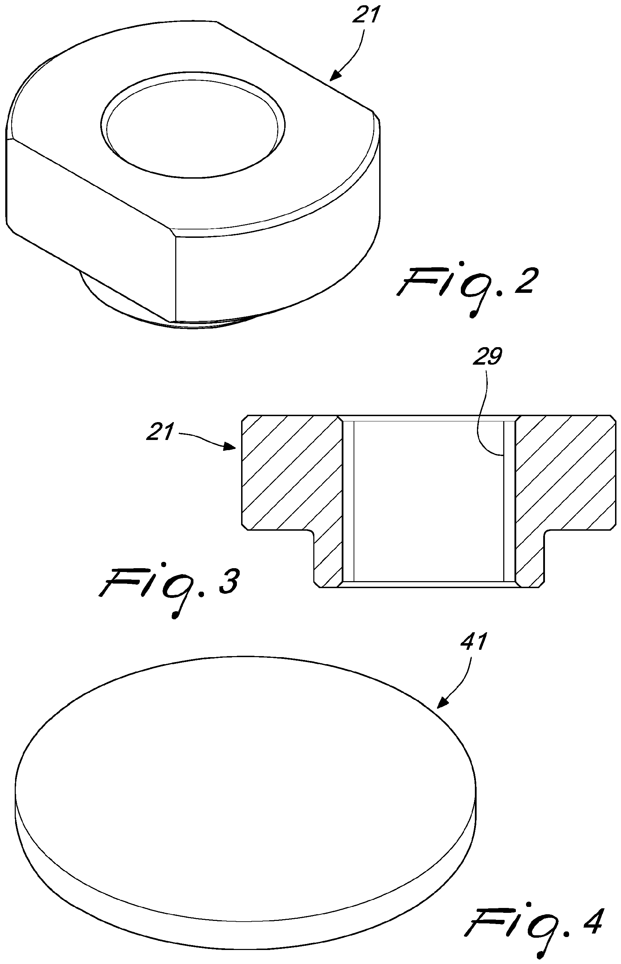

Figure 2 is a perspective view of a bushing for an upper plate;
Figure 3 is a cross-sectional view of the bushing of Figure 2;
Figure 4 is a perspective view of a recording disk for a lower plate;

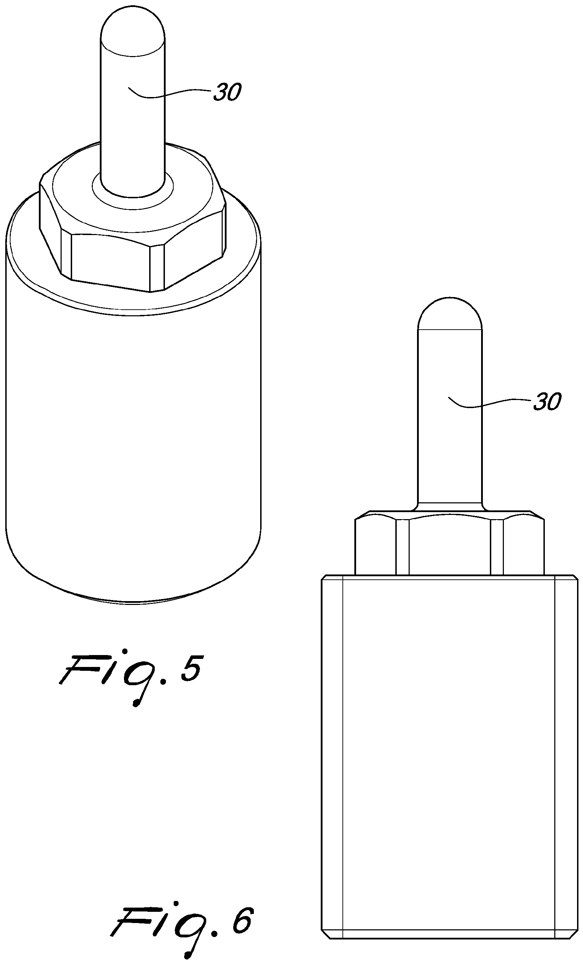

Figure 5 is a perspective view of a tracing tip for an upper plate;
Figure 6 is a side view of the tip of Figure 5.

With reference to the figures, the method for determining the normal static and dynamic intramaxillary ratios of a patient, and in particular the intermaxillary distance (DVO), according to the invention, comprises the following steps.

First of all, performing an intraoral scan of the patient at maximum intercuspation and in the rest position. In particular, with this scan a scan is performed of the upper arch, lower arch and occlusal ratio.

In more detail, with reference to such first pitch, in the preferred embodiments, the method begins with the acquisition of the complete upper arch, which must include all the dental elements with minimum 2 mm of vestibular tissue beyond the neck of every dental element, the totality of the palate comprising the retromolar tubers, the palatine rugae, and the hard palate up to the passage between the hard palate and the soft palate.

The lower arch must be complete and must include all the dental elements, with minimum 2 mm of vestibular tissue, beyond the neck of each dental element, and must include the retromolar trigones as much as possible.

Preferably, the occlusal ratio must first be measured at maximum intercuspation (MIC), verified and validated by the clinic, and the dynamic occlusion that registers the laterality and real protrusiveness of the patient must also be verified and validated by the clinic.

For systems that do not entail the measurement of dynamic occlusion, it is possible to measure only the static occlusion, adding if required the occlusal ratio of maximum left laterality, maximum right laterality and maximum protrusiveness. Optionally an additional, more careful static and dynamic occlusion check can be performed after having made the plates, which will be described below.

Once the above scans have been performed it is sufficient to duplicate the imprint and perform a new scan of only the static occlusal ratio in the freeway space position. In order to produce this position, it is necessary to simply ask the patient to swallow and to then hold the arches at rest, as he or she naturally would, without seeking the MIC.

The method further entails taking a plurality of photographs of the face of the patient which contain the front view of the mouth so as to obtain initial parameters for the mouth of the patient.

Preferably, by means of the photographs one or more of the following parameters are acquired (even more preferably all of them):
- position of the support of the lips when the mouth is closed,
- status at rest,
- position of the median line of the mouth when the lips are open,
- position of the smile line when the lips are open,
- length of the incisor teeth with respect to the lip when the lips are open,
- median line of the mouth in the smiling condition,
- length of the canine and incisor teeth in the smiling condition,
- dimensions and proportions of the mouth in the smiling condition,
- alignments of the mouth in the smiling condition,
- percentage of teeth exposed in the smiling condition.

The smiling condition should be understood as the condition in which the mouth is closed and the lips are open in the patient's natural smiling expression.

Optionally, in this step it is possible to perform a simulation of appearance.

Advantageously, the photographic management of the patient's appearance can be an aid to the entire course of therapy after the acquisition.

The purpose of the first photographs acquired in this step is to provide the technician with an initial reference of the patient's appearance at the intermaxillary distance (DVO), i.e. the distance between the upper and lower maxillary bone, current and at maximum intercuspation.

The method also entails performing a latero-lateral teleradiograph (TLL).

The TLL has been added to the method in order to perform a cephalometric analysis that adds a numeric verification parameter to be summed with the aesthetic valuations dictated by the photographs and to the spatial and functional valuations ensured by the plates which will be described below.

The applicant has devised this solution by taking into consideration the fact that (as ascertained in the past by Slavicek, R.) the average lower facial height is quantified as 49° (the angle between ANS (anterior nasal spine) XI (center of the ascending ramus of the mandible) D (center of the chin symphysis)). A deviation of 1.2° corresponds to an interocclusal difference of 1 mm at the level of the first premolars (height of the tip of the plates).

The study by Ricketts, J. can also be taken into consideration. This study quantifies the average lower facial height as 47°, simply because it considers a slightly different reference (the angle between ANS (anterior nasal spine) XI (center of the ascending ramus of the mandible) Pc (point of the chin)). A deviation of 1.2° corresponds to an interocclusal difference of 1 mm at the level of the first premolars (height of the tip of the plates).

Therefore for the purposes of practical execution of the method, the average lower facial height can be quantified between 47° and 49° depending on the reference taken into consideration.

The data item produced by the cephalometric analysis is used as an additional aid in obtaining the correct DVO and as a potential tool to verify what is obtained in the subsequent steps of the method.

After performing the acquisitions described above, in the method according to the invention, a virtual CAD model is made of a pair of intraoral plates 20, 40 on the basis of one or more of the acquisitions and preferably on the basis of all of them.

These plates comprise an upper plate 20, which is adapted to be fixed to the upper dental arch of the patient, and a lower plate 40, which is adapted to be fixed to the lower dental arch of the patient.

The upper plate 20 is adapted to support a tracing tip 30, preferably by way of a threaded support bushing 21.

The lower plate 40 comprises a recording disk 41 which is configured to record the movements of the tracing tip 30 in a known manner (for example by way of mechanical and/or chemical and/or magnetic interaction therewith, in a known manner).

After obtaining the CAD model, the method entails providing the pair of intraoral plates starting from the virtual CAD model.

In more detail, each plate 20, 40 comprises a supporting base, 22, 42 which is shaped complementarily with respect to the respective dental arch (upper for the upper plate 20 and lower for the lower plate 40).

Each plate 20, 40 also comprises engagement elements 25, 45 (for example hooks), for engagement with the respective dental arch.

The number and the position of the engagement elements 25, 45 is decided on a case by case basis based on the specific shape structure of the mouth and on the inclination and position of the teeth.

In the non-limiting embodiment illustrated there are two engagement elements 25, 45 (constituted by hooks) for each plate 20, 40. However, in other embodiments, the number and the position of the engagement elements (preferably hooks) are different, being chosen as a function of the individual patient so as to ensure the best stability.

In practice, the tracing tip 30 is fixed on the supporting base 22 of the upper plate 20 and the recording disk 41 is fixed on the supporting base 42 of the lower plate 22.

In the preferred embodiment, making first the CAD model of the plates and then the actual plates themselves is carried out via the following operative steps:
Execute the design of a first supporting base 22, 32 of the plates at a constant starting thickness of 1.5 mm, with constant 0.05 mm adaptation space in order to ensure the fit of the plate in the oral cavity.

Conveniently, retention of the undercuts is quantified as 0.25 mm in the identified holding areas, which will be handled with the execution of the engagement elements 25, 45 constituted by custom-made holding hooks of sintered chromium.

Preferably the material used for the bases 22, 42 of the plates 20, 40 is VisiJet M3 Stoneplast (MJP) - produced by 3DSystem^{®} - printed with Projet MJP 3500Dental^{®}.

Preferably the material used for the hooks 25, 45 is Mediloy S-Co - produced by Bego^{®} - printed with EOS M270^{®}.

After this, the lower reference plane, for the positioning of the disk 41, is managed by taking as reference the intersection between the axis that passes through the central line, and the axis that passes through the central line of the sixth lower molars.

The lower plate 40 is configured so that the recording disk 41 is positioned 1 mm below the occlusal plane and parallel to it, creating a seat by subtraction 0.5 mm deep to receive the disk 41. This disk 41 is preferably titanium and 20 mm in diameter (in more detail: grade 2 titanium material, diameter 20 mm, thickness 1 mm, produced using a sliding headstock lathe).

A custom-made coupling is designed on the upper plate 20 and replicates the tracing tip 30, thus enabling the precise seating of the tracing tip 30 which will delineate the tracing. The tracing tip 30 is preferably made of titanium (grade 5), and has a height of 19 mm, and is made using a sliding headstock lathe.

The tip 30 will be positioned at the intersection of the axis that passes through the central line and the axis that passes between the second lower premolar and the first lower premolar.

The inclination of the tip 30 must be perpendicular to the Frankfurt plane (lower orbital plane and condyles) considering the inclination of the upper incisors but it must also consider the inclination of the recording disk 41 positioned on the lower plane.

The positioning of the tip 30 will be guaranteed to rest on the lower disc 40 in two positions:
A) first position defined with a calculation performed by the clinic on the TLL, intersected with preliminary analysis of appearance and with the clinical assessment of the free way space; this first position will be marked on the punch die in the area of the threading with a first color (for example the color RED) so as to be replicable.
B) second position: tip positioned with or without any opening and in normal occlusion. This second position, which will be marked on the tip 30 in the area of the threading with a second color (for example the color BLUE) so as to be replicable, enables the clinic to identify a modulated starting position while also reducing the initial opening and without the need to add a measurement that will need to be subtracted later with a change in the reference planes.

It should also be noted that the tip 30 is provided with a calibrated threading so that each complete rotation causes a preset increase in opening (for example of 1 mm, a half-rotation of 0.5 mm, a quarter-rotation of 0.25 mm and the like).

The tip 30 is screwed into the custom-made threaded bushing 21 which is preferably made of TECAPEEK^{®} material, and produced using a sliding headstock lathe.

Therefore the bushing 21 is provided with a threaded seat 29 which is configured so that the tip can be screwed inside it.

The plates 20, 40 thus provided make it possible to work in total freedom even with the mouth closed, and are stabilized by virtue of the engagement elements 25, 45 (i.e. the holding hooks).

Advantageously, to produce the CAD model, a CAD software package is used in which the design operations listed above are part of a codified work flow that entails sub-steps that carry out the points cited above, and in particular:
- definition of the occlusal plane;
- cutting out the imprints, making sure that the extension of the acquired data item meets the minimum scanning requirements for both arches;
- identifying a fitting axis for both models, which will then make it possible to manage the blocking-out of the undercuts;

- the undercuts are blocked out by analyzing each individual case so as to identify specific holding areas for positioning the engagement elements 25, 45 which in addition to ensuring stability must never interfere with the antagonist arch;
- once the holding areas are identified, the spline (perimetric curve) is traced, which determines the profile of the supporting base 22, 42 of each plate 20, 40;
- after the supporting base 22, 42 is created, the engagement elements 25, 45 are designed;
- following the creation of the engagement elements 25, 45 a first optimization of the plate 20, 40 is performed, connecting the engagement elements to the respective supporting base 22, 42 with organic modeling tools;
- once the two plates 20, 40 are optimized, the recording disk 41 is positioned in accordance with the guidelines listed above;
- after having positioned the disk 41 on the lower plate 40, the tip 30 is positioned on the higher plate 20, again in accordance with the guidelines listed above;
- once the disk 41 and the tip 30 are positioned, it is possible to perform a new optimization of the plates 20, 40 in order to create connectors and stiffeners.

Before moving on to the physical production of the plates, conveniently, in the virtual CAD model, the engagement elements 25, 45 are separated, using an industrial application, from the supporting base 22, 42 of the respective plate 20, 40 in order to correct any aberrations that would compromise the producibility.

In more detail, the engagement elements 25, 45 are cut using cutting splines, which separate them from the supporting base 22, 42 of the respective plate 20, 40, while ensuring a precise interlocking is maintained that ensures the repositioning of that engagement element 25, 45 inside the plate 20, 40. The fitting gap between an engagement element 25, 45 and the corresponding supporting base 22, 42 is preferably quantified as 0.05 mm.

The file (i.e. the CAD model) thus obtained is subjected to a correction procedure aimed at identifying and correcting graphic defects, such as for example the following defects: inverted normals, irregular edges, irregular contours, adjacent irregular edges, planar holes, possible surface artifacts, overlapping triangles, intersecting triangles.

After producing the plates 40, 20 the method entails fixing these upper plates 20 and lower plates 40 respectively to the upper dental arch and lower dental arch of the patient and then determining the normal static and dynamic intramaxillary ratios of the patient taking as a basis at least partially the movements of the tracing tip 30 recorded by the recording disk 41.

Preferably, the normal static and dynamic intramaxillary ratios of the patient are determined also as a function of the acquisitions obtained in the steps described previously (intraoral scan, photographs, latero-lateral teleradiograph).

Also disclosed is the pair of plates 20, 40 provided as described previously.

The operation of the plates is clear and evident from the foregoing description.

In practice it has been found that the method for determining the normal static and dynamic intramaxillary ratios of a patient, according to the present invention, achieves the intended aim and objects in that it makes it possible to standardize the components in order to make them better performing and easier to use in a method for determining the normal static and dynamic intramaxillary ratios of a patient.

Another advantage of the method according to the invention is that it avoids steps that are handled manually, both in terms of taking the imprint by the clinic, and in terms of handling the thermoforming and manual execution by the technician, in a method for determining the normal static and dynamic intramaxillary ratios of a patient.

Another advantage of the method according to the invention is that it improves the work flow.

Another advantage of the method according to the invention is that it improves the ease of reading the acquired data.

The method, thus conceived, is susceptible of numerous modifications and variations, all of which are within the scope of the appended claims.

Moreover, all the details may be substituted by other, technically equivalent elements.

In practice the materials employed, and the contingent dimensions and shapes, may be any according to requirements and to the state of the art.

This application claims priority from Italian Patent Application No. 102020000032369

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for determining the normal static and dynamic intramaxillary ratios of a patient, comprising the steps of:
a. performing an intraoral scan of the patient at maximum intercuspation and in the rest position, said scan comprising a scan of the upper arch, lower arch and occlusal ratio;
b. taking a plurality of photographs of the face of the patient which contain the front view of the mouth so as to obtain initial parameters for said mouth of the patient;
c. performing a latero-lateral teleradiograph, in order to perform a cephalometric analysis;
d. providing a virtual CAD model of a pair of intraoral plates (20, 40) on the basis of the acquisitions obtained in the preceding steps a., b., c., said pair of plates (20, 40) comprising an upper plate (20), which is adapted to be fixed to the upper dental arch of the patient and to support a tracing tip (30), and a lower plate (40), which is adapted to be fixed to the lower dental arch of the patient and comprises a recording disk (41) which is configured to record the movements of said tracing tip (30);
e. manufacturing said pair of intraoral plates starting from said virtual CAD model;
f. fixing said upper plate (20) and said lower plate (40) respectively to the upper dental arch and lower dental arch of the patient;
g. determining the normal static and dynamic intramaxillary ratios of the patient taking as a basis at least partially the movements of the tracing tip (30) recorded by the recording disk (41).

2. The method according to claim 1, wherein the normal static and dynamic intramaxillary ratios of the patient are determined also as a function of the acquisitions obtained in one or more of steps a., b., and c.

3. The method according to claim 1 or 2, wherein a scan of the upper arch, lower arch and occlusal ratio is performed in step a.

4. The method according to one or more of the preceding claims, wherein in step c. one or more of the following parameters is acquired:
- position of the support of the lips when the mouth is closed,
- status at rest,
- position of the median line of the mouth when the lips are open,
- position of the smile line when the lips are open,
- length of the incisor teeth with respect to the lip, when the lips are open,
- median line of the mouth in the smiling condition,
- length of the canine and incisor teeth in the smiling condition,
- dimensions and proportions of the mouth in the smiling condition,
- alignments of the mouth in the smiling condition,
- percentage of teeth exposed in the smiling condition.

## Patentansprüche

1. Ein Verfahren zur Bestimmung der normalen statischen und dynamischen intramaxillären Verhältnisse bei einem Patienten, das folgende Schritte umfasst:
a. das Durchführen eines intraoralen Scans bei dem Patienten bei maximaler Interkuspidation und in der Ruheposition, wobei der Scan einen Scan des oberen Zahnbogens, des unteren Zahnbogens und des Okklusionsverhältnisses umfasst;
b. das Aufnehmen einer Vielzahl von Fotografien des Gesichts des Patienten, welche die Vorderansicht des Mundes enthalten, um Ausgangsparameter für den Mund des Patienten zu erhalten;
c. das Durchführen latero-lateralen Fernröntgens, um eine kephalometrische Analyse durchzuführen;
d. das Bereitstellen eines virtuellen CAD-Modells eines Paares intraoraler Platten (20, 40) auf der Basis der Aufnahmen, die in den vorhergehenden Schritten a., b., c. gemacht wurden; wobei das Paar von Platten (20, 40) eine obere Platte (20) umfasst, die ausgebildet ist, um am oberen Zahnbogen des Patienten befestigt zu werden und eine Abtastspitze (30) zu tragen, und eine untere Platte (40), die ausgebildet ist, um am unteren Zahnbogen des Patienten befestigt zu werden, und eine Aufnahmeplatte (41) umfasst, die ausgebildet ist, um die Bewegungen der Abtastspitze (30) aufzunehmen;
e. das Herstellen des Paares intraoraler Platten, ausgehend von dem virtuellen CAD-Modell;
f. das Befestigen der oberen Platte (20) und der unteren Platte (40) am oberen Zahnbogen beziehungsweise am unteren Zahnbogen des Patienten;
g. das Bestimmen des normalen statischen und des dynamischen intramaxillären Verhältnisses beim Patienten, wobei als Basis zumindest teilweise die Bewegungen der Abtastspitze (30) dienen, die von der Aufnahmeplatte (41) aufgenommen wurden.

2. Das Verfahren gemäß Anspruch 1, worin das normale statische und das dynamische intramaxilläre Verhältnis beim Patienten auch als Funktion der Aufnahmen bestimmt werden, die in einem oder mehreren der Schritte a., b. und c. gemacht wurden.

3. Das Verfahren gemäß Anspruch 1 oder 2, worin ein Scan des oberen Zahnbogens, des unteren Zahnbogens und des Okklusionsverhältnisses in Schritt a. durchgeführt wird.

4. Das Verfahren gemäß einem oder mehreren der obigen Ansprüche, wobei in Schritt c. einer oder mehrere der folgenden Parameter erfasst werden:
- Position des Aufliegens der Lippen, wenn der Mund geschlossen ist,
- Ruhezustand,
- Position des Medians des Mundes, wenn die Lippen geöffnet sind,
- Position der Lachlinie, wenn die Lippen geöffnet sind,
- Länge der Schneidezähne mit Bezug auf die Lippen, wenn die Lippen geöffnet sind,
- Median des Mundes im lächelnden Zustand,
- Länge der Eckzähne und der Schneidezähne im lächelnden Zustand,
- Abmessungen und Proportionen des Mundes im lächelnden Zustand,
- Ausrichtungen des Mundes im lächelnden Zustand,
- Prozentsatz exponierter Zähne im lächelnden Zustand.

## Revendications

1. Procédé pour déterminer les taux intramaxillaires normaux statiques et dynamiques d'un patient, comprenant les étapes consistant à :
a. effectuer un scan intra-buccal du patient en intercuspation maximale et en position de repos, ledit scan comprenant un scan de l'arcade supérieure, de l'arcade inférieure et du rapport occlusal ;
b. prendre une pluralité de photographies de la face du patient qui comportent la vue de face de la bouche de manière à obtenir des paramètres initiaux pour ladite bouche du patient ;
c. effectuer une téléradiographie latéro-latérale, afin de réaliser une analyse céphalométrique ;
d. fournir un modèle CAD virtuel d'une paire de plaques intra-buccales (20, 40) sur la base des acquisitions obtenues dans les étapes précédentes a., b., c, ladite paire de plaques (20, 40) comprenant une plaque supérieure (20), qui est adaptée pour être fixée à l'arcade dentaire supérieure du patient et pour supporter une pointe de traçage (30), et une plaque inférieure (40), qui est adaptée pour être fixée à l'arcade dentaire inférieure du patient et qui comprend un disque d'enregistrement (41) qui est conçu pour enregistrer les mouvements de ladite pointe de traçage (30) ;
e. fabriquer ladite paire de plaques intra-buccales à partir dudit modèle CAD virtuel ;
f. fixer ladite plaque supérieure (20) et ladite plaque inférieure (40) respectivement à l'arcade dentaire supérieure et à l'arcade dentaire inférieure du patient ;
g. déterminer les taux intramaxillaires normaux statiques et dynamiques du patient en prenant comme base au moins partiellement les mouvements de la pointe de traçage (30) enregistrés par le disque d'enregistrement (41).

2. Procédé selon la revendication 1, dans lequel les taux intramaxillaires normaux statiques et dynamiques d'un patient sont déterminés également en fonction des acquisitions obtenues dans une ou plusieurs des étapes a., b., et c.

3. Procédé selon la revendication 1 ou 2, dans lequel un scan de l'arcade supérieure, de l'arcade inférieure et du rapport occlusal est effectué dans l'étape a.

4. Procédé selon une ou plusieurs des précédentes revendications, dans lequel dans l'étape c, un ou plusieurs des paramètres suivants est acquis :
- la position du support des lèvres lorsque la bouche est fermée,
- l'état au repos,
- la position de la ligne médiane de la bouche lorsque les lèvres sont ouvertes,
- la position de la ligne du sourire lorsque les lèvres sont ouvertes,
- la longueur des incisives par rapport à la lèvre, lorsque les lèvres sont ouvertes,
- la ligne médiane de la bouche dans un état où l'on sourit,
- la longueur des canines et des incisives dans un état où l'on sourit,
- les dimensions et les proportions de la bouche dans un état où l'on sourit,
- les alignements de la bouche dans un état où l'on sourit,
- le pourcentage de dents exposées dans un état où l'on sourit.
